(19) Europäisches Patentamt / European Patent Office / Office européen des brevets

(11) **EP 2 307 223 B1**

(12) **EUROPÄISCHE PATENTSCHRIFT**

(45) Veröffentlichungstag und Bekanntmachung des Hinweises auf die Patenterteilung:
**07.03.2012 Patentblatt 2012/10**

(21) Anmeldenummer: **09780649.1**

(22) Anmeldetag: **15.07.2009**

(51) Int Cl.:
**B60K 35/00** (2006.01)

(86) Internationale Anmeldenummer:
**PCT/EP2009/059085**

(87) Internationale Veröffentlichungsnummer:
**WO 2010/010025 (28.01.2010 Gazette 2010/04)**

(54) **VERFAHREN ZUM ANZEIGEN EINES ZWEISEITIGEN FLÄCHIGEN OBJEKTS AUF EINEM DISPLAY IN EINEM KRAFTFAHRZEUG UND ANZEIGEEINRICHTUNG FÜR EIN KRAFTFAHRZEUG**

METHOD FOR DISPLAYING A TWO-SIDED FLAT OBJECT ON A DISPLAY IN A MOTOR VEHICLE AND DISPLAY DEVICE FOR A VEHICLE

PROCÉDÉ D AFFICHAGE D UN OBJET PLAN DOUBLE FACE SUR UN ÉCRAN DANS UN VÉHICULE AUTOMOBILE ET DISPOSITIF D AFFICHAGE POUR UN VÉHICULE AUTOMOBILE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.07.2008 DE 102008034507**

(43) Veröffentlichungstag der Anmeldung:
**13.04.2011 Patentblatt 2011/15**

(73) Patentinhaber: **Volkswagen AG**
**38436 Wolfsburg (DE)**

(72) Erfinder:
• **DEHMANN, Rainer**
**10961 Berlin (DE)**
• **HOFMANN, Gustav**
**38114 Braunschweig (DE)**
• **KUHN, Mathias**
**14129 Berlin (DE)**
• **HAUSCHILD, Frank**
**10587 Berlin (DE)**

(74) Vertreter: **Reitstötter - Kinzebach**
**Patentanwälte**
**Sternwartstrasse 4**
**81679 München (DE)**

(56) Entgegenhaltungen:
**EP-A- 0 547 993       EP-A- 1 736 859**
**WO-A-2006/108617    WO-A-2009/024474**
**DE-A1- 19 941 955    GB-A- 2 406 768**

**Beschreibung**

Die vorliegende Erfindung betrifft ein Verfahren zum Anzeigen von Informationen in einem Kraftfahrzeug, bei dem zumindest ein flächiges Objekt in einer ersten Darstellung, welche eine Seite des Objekts zeigt, und in einer zweiten Darstellung, welche die andere Seite des Objekts zeigt, mittels eines in dem Kraftfahrzeug befestigten Displays grafisch dargestellt wird. Auf den jeweiligen Seiten des flächigen grafischen Objekts werden verschiedene Informationen dargestellt. Des Weiteren erstreckt sich das grafische Objekt in der ersten und/oder zweiten Darstellung in zumindest einer Richtung im Wesentlichen über die vollständige Größe des Displays. Ferner betrifft die Erfindung eine Anzeigeeinrichtung für ein Kraftfahrzeug mit einem Display zur grafischen Darstellung von Informationen, das in dem Kraftfahrzeug befestigt ist. Die Anzeigeeinrichtung umfasst außerdem eine Steuereinrichtung, mit welcher Grafikdaten erzeugbar sind, die zumindest ein auf dem Display darstellbares flächiges grafisches Objekt in einer ersten Darstellung, welche eine Seite des Objekts zeigt, und in einer zweiten Darstellung, welche die andere Seite des Objekts zeigt, darstellen. Wie bei dem Verfahren werden auf den jeweiligen Seiten des flächigen grafischen Objekts verschiedene Informationen dargestellt. Ferner erstreckt sich das grafische Objekt in der ersten und/oder zweiten Darstellung in zumindest einer Richtung im Wesentlichen über die vollständige Größe des Displays.

In einem Kraftfahrzeug gibt es verschiedene Informations- und Kommunikationsbereiche, denen Anzeigeinstrumente zugeordnet sind. Sie dienen der Information des Fahrers und der Mitfahrer. Ferner können sie den Fahrer bei der Navigation oder der Kommunikation mit der Außenwelt unterstützen. Die Anzeige kann insbesondere verkehrs- oder betriebsbezogene Daten des Fahrzeugs visuell darstellen. In der Nähe des primären Sichtfelds des Fahrers ist das sog. Kombiinstrument angeordnet. Üblicherweise befindet es sich im Cockpit hinter dem Lenkrad, wobei es durch eine Öffnung des Lenkrads sichtbar ist. Es dient insbesondere der Anzeige der Geschwindigkeit, des Tankinhalts, der Kühlertemperatur und anderer betriebsbezogener Informationen des Kraftfahrzeugs. Ferner können Radio- und andere Audiofunktionen dargestellt werden. Schließlich können Menüs für Telefon, Navigation, Telematikdienste und Multimediaanwendungen angezeigt werden. Als Display werden üblicherweise Flüssigkristallanzeigen in verschiedenen Ausführungen verwendet.

Die in einem Kraftfahrzeug verwendeten Displays sind üblicherweise aufgrund der Bauraumverhältnisse im Innenraum des Kraftfahrzeugs relativ klein. Bei der Darstellung von Informationen auf einem derartigen Display ist es daher besonders wichtig, dass die grafische Darstellung der Information die Größe des Displays so gut wie möglich ausnutzt. Bei der vorliegenden Erfindung erstreckt sich das grafische Objekt, welches auf dem Display dargestellt wird, zumindest in einer Darstellungsart im Wesentlichen über die vollständige Größe des Displays, damit der Fahrer oder ein Mitfahrer die von dem grafischen Objekt dargestellte Information so einfach und schnell wie möglich erfassen kann.

In der DE 100 01 988 A1 ist beispielsweise ein Kombiinstrument zur Anzeige von betriebs- und/oder verkehrsbezogenen Daten beschrieben. Um das vielfältige Informationsangebot besser aufnehmen zu können, wird in der DE 103 03 792 A1 eine perspektivische Darstellung dreidimensionaler Elemente vorgeschlagen.

Als weitere Anzeigeeinrichtung besitzt ein Fahrzeug häufig eine Multifunktionsanzeige in der Mittelkonsole oder oberhalb der Mittelkonsole. Eine solche Anzeige für ein Multifunktionsbedienelement ist beispielsweise in der DE 199 41 955 A1 beschrieben.

In der GB 2 406 768 A, die den Oberbegriff des Anspruchs 1 bildet, ist eine nzeigeeinrichtung beschrieben, bei welcher auf einem zweidimensionalen Display dreidimensionale Fenster perspektivisch dargestellt werden. Die Fenster können auf verschiedene Weise manipuliert werden, beispielsweise können die Fenster gedreht werden.

Um die vielfältigen Bedien- und Anzeigemöglichkeiten übersichtlich darzustellen, werden häufig hierarchische Menüstrukturen verwendet. Ein Menü zeigt verschiedene Menüpunkte und gegebenenfalls den Menüpunkten zugeordnete Grafiken oder Icons an. Bei der Auswahl eines Menüpunkts öffnet sich ein Untermenü mit weiteren Untermenüpunkten. Diese Struktur kann über mehrere Hierarchieebenen fortgeführt werden. Außerdem kann einem Menüpunkt anstatt eines Untermenüs ein bestimmtes Anzeigebild zugeordnet sein, welches die dem Menüpunkt zugeordnete Information darstellt.

Werden solche Menüstrukturen in einem Kraftfahrzeug eingesetzt, ergibt sich das Problem, dass die Navigation innerhalb dieser Menüstrukturen und die Aufnahme der von dem Display angezeigten Informationen die Aufmerksamkeit des Fahrers derart beanspruchen, dass zumindest bei einigen Anwendungen, wie der Zieleingabe für das Navigationssystem, das gleichzeitige sichere Führen des Kraftfahrzeugs durch den Fahrer beeinträchtigt ist. Will somit der Fahrer die Einrichtungen für solche Anwendungen des Fahrzeugs bedienen, sollte er dies vor dem Beginn einer Fahrt tun oder die Fahrt für die Bedienung unterbrechen. Derartige Beeinträchtigungen für die Bedienung sind jedoch unerwünscht.

Es ist daher wünschenswert, die Informationen im Kraftfahrzeug so darzustellen, dass sie schnell und intuitiv vom Fahrer aufgenommen werden können, so dass das Erfassen der dargestellten Informationen nicht zu einer Ablenkung des Fahrers während der Fahrt führt. Ferner soll die Bedienung so intuitiv, einfach und schnell durchführbar sein, dass der Fahrer die Einrichtungen des Fahrzeugs, deren Informationen von der Anzeigeeinrichtung dargestellt werden, auch während der Fahrt bedienen kann, selbst wenn von der Anzeigeeinrichtung gegebenenfalls komplexe hierarchische Strukturen darstellbar sind. Die Informationsdarstellung und die mit einer Informationsdarstellung verbundene Bedienung in dem Kraftfahrzeug trägt somit zur Sicherheit beim Führen des Kraftfahrzeugs bei.

Es ist die Aufgabe der vorliegenden Erfindung, ein Verfahren und eine Anzeigeeinrichtung der eingangs genannten Art bereitzustellen, bei denen die dargestellte Information so schnell und intuitiv wie möglich erfassbar ist und die eine schnelle, intuitive und einfache Bedienung von Fahrzeugeinrichtungen ermöglichen, deren Informationen dargestellt werden.

Erfindungsgemäß wird diese Aufgabe durch ein Verfahren mit den Merkmalen des Anspruchs 1 und eine Anzeigeeinrichtung mit den Merkmalen des Anspruchs 9 gelöst. Vorteilhafte Aus- und Weiterbildurigen ergeben sich aus den Unteransprüchen.

Das erfindungsgemäße Verfahren ist dadurch gekennzeichnet, dass in Abhängigkeit von einem Steuersignal die Darstellung des grafischen Objekts so verändert wird, dass sich das grafische Objekt bei einer perspektivischen Darstellung auf dem Display von einer Seite zu der anderen Seite dreht, wobei bei der Drehung das flächige grafische Objekt immer vollständig zumindest perspektivisch dargestellt wird.

Herkömmlicherweise wird die Drehung eines grafischen Objekts so dargestellt, dass die Anzeigefläche innerhalb des Displays, die von dem Objekt bei der Drehung eingenommen wird, Bereiche des Displays umfasst, die von den Endstellungen zu Beginn der Drehung und am Ende der Drehung nicht umfasst sind. Ein solche Drehung kann somit nicht dargestellt werden, wenn das grafische Objekt in der Ausgangsstellung die Größe des Displays zumindest in einer Richtung im Wesentlichen vollständig einnimmt. Bei dem erfindungsgemäßen Verfahren ist es somit möglich, dass das grafische Objekt zumindest in einer Richtung das Display vollständig ausfüllt, so dass die von dem Objekt dargestellte Information sehr groß und damit für den Betrachter sehr schnell und einfach erfassbar dargestellt werden kann und gleichzeitig eine Drehung des grafischen Objekts von einer Seite zu der anderen Seite vollständig visualisiert wird.

Bevorzugt erzeugt die Steuereinrichtung zur Darstellung der Drehung aufeinander folgende Zwischenbilder des grafischen Objekts, die zu einer Animation der Drehung des Objekts führen.

Gemäß einer Ausgestaltung des erfindungsgemäßen Verfahrens verändert die Steuereinrichtung die Grafikdaten so, dass das grafische Objekt um eine vertikale Achse gedreht wird, die zumindest zu Beginn der Drehung außerhalb des grafischen Objekts liegt oder durch den seitlich äußersten Punkt am Rand des grafischen Objekts verläuft. Dabei ist die vertikale Richtung die Richtung der Höhe des Displays und die horizontale Richtung die Richtung der Breite des Displays. Dabei wird die Richtung der Höhe und der Breite des Displays durch eine Vorzugsrichtung bei der Darstellung der Information auf dem Display definiert. Wird beispielsweise Text auf dem Display dargestellt, erstreckt sich die Buchstabenhöhe in vertikaler Richtung, eine Textzeile verläuft hingegen in horizontaler Richtung. Üblicherweise ist das Display im Innenraum des Kraftfahrzeugs so befestigt, dass sich die Anzeigefläche in einer vertikal ausgerichteten Ebene erstreckt. Selbst wenn das Display im Kraftfahrzeug nicht exakt vertikal ausgerichtet ist, wird unter der vertikalen Drehachse im Sinne der Erfindung eine Achse verstanden, die in der Displayebene liegt und die sich in Richtung der Höhe des Displays erstreckt.

Das grafische Objekt erstreckt sich bei dem erfindungsgemäßen Verfahren insbesondere in horizontaler Richtung über die gesamte Breite des Displays. In diesem Fall wird die vertikale Drehachse zumindest zu Beginn der Drehung von der vertikalen Seitenkante des Displays bzw. des grafischen Objekts gebildet. Besonders bevorzugt füllt das grafische Objekt zumindest zu Beginn der Drehung die Größe des Displays vollständig aus.

Bei dem erfindungsgemäßen Verfahren verändert die Steuereinrichtung die Grafikdaten so, dass die vertikale Achse bei der Drehung in horizontaler Richtung verschoben wird und gleichzeitig das grafische Objekt um die vertikale Achse gedreht wird, so dass nach einer Drehung um 180° die vertikale Achse die Position bei der zweiten Darstellung des grafischen Objekts, bei welcher die andere Seite dargestellt wird, erreicht hat. Die Animation der Drehung des grafischen Objekts setzt sich somit aus zwei Transformationen zusammen: Erstens bewegt sich die Drehachse in horizontaler Richtung und zweitens wird eine Drehung um diese Achse ausgeführt. Für die Art der Koppelung dieser beiden Bewegungen gibt es verschiedene Möglichkeiten. Bei dem erfindungsgemäßen Verfahren verändert die Steuereinrichtung die Grafikdaten so, dass die horizontale Verschiebung der vertikalen Achse bevorzugt linear mit der Drehung des grafischen Objekts synchronisiert ist. Dies bedeutet nicht, dass die Verschiebung bzw. Drehung eine lineare Bewegung ist, sondern nur, dass eine Veränderung des Drehwinkels um einen bestimmten Bruchteil der Gesamtdrehung um 180° zu einer Verschiebung der vertikalen Achse um denselben Bruchteil der Gesamtverschiebung der Achse führt.

Gemäß einer Ausgestaltung des erfindungsgemäßen Verfahrens wird die Drehung des grafischen Objekts in eine erste Phase, bei der Bildpunkte des grafischen Objekts beschleunigt werden, und eine zweite Phase, bei der Bildpunkte des grafischen Objekts abgebremst werden, unterteilt. Aufgrund der Synchronisierung der Drehbewegung mit der Verschiebung der vertikalen Achse wird damit auch die Verschiebung der Achse in die zwei Phasen unterteilt, so dass die Bewegung der Achse in der ersten Phase beschleunigt ist und in der zweiten Phase abgebremst ist. Dabei entspricht die erste Phase z. B. einem Drehwinkel des grafischen Objekts von 0° bis 90° und einer Verschiebung der vertikalen Achse bis zur Mitte des Displays und die zweite Phase einem Drehwinkel des grafischen Objekts von 90° bis 180° und einer Verschiebung der vertikalen Achse von der Mitte bis zu anderen Seitenkante des Displays.

Unter einer beschleunigten Bewegung wird hier eine positive Beschleunigung verstanden, bei der sich die Geschwindigkeit erhöht, und unter einer abgebremsten Bewegung wird eine negative Beschleunigung verstanden, bei der sich die Geschwindigkeit erniedrigt.

Bei dem erfindungsgemäßen Verfahren ist die Art und Weise, wie die Objekte gedreht werden, von besonderer Bedeutung. Von der Darstellung dieser Drehung hängt es nämlich ab, wie gut und wie schnell sich der Betrachter in den Objekten orientieren kann, auch wenn sie gedreht worden sind. Dabei hat sich herausgestellt, dass viele Animationstechniken, die außerhalb des Kraftfahrzeugs bei der veränderlichen grafischen Darstellung von Objekten eingesetzt werden, für die Verwendung im Kraftfahrzeug ungeeignet sind, da im Kraftfahrzeug der Betrachter das Display nur für kurze Augenblicke betrachtet. Der zeitliche Verlauf der Veränderung einer Position eines grafisch dargestellten Objekts ist daher auch für die Sicherheit beim Führen des Fahrzeugs von besonderer Bedeutung.

Gemäß einer bevorzugten Weiterbildung des erfindungsgemäßen Verfahrens werden bei der Berechnung der Grafikdaten für aufeinander folgende Zwischenbilder zur Darstellung der Drehung die aufeinander folgenden Positionen x der Bildpunkte des grafischen Objekts in der ersten Phase folgende Rechenschritte durchgeführt:

$$(i) \qquad n = \frac{t - t_0}{d_1} \qquad ;$$

$$(ii) \qquad x = b_1 + c_1 \cdot n^4 \qquad ,$$

wobei

$t$ eine Systemzeit ist, zu der die erzeugten Grafikdaten auf dem Display dargestellt werden, wobei zu Beginn der Drehung der ersten Phase $t = t_0$ ist,

$d_1$ die Dauer der ersten Phase ist,

$b_1$ die Ausgangsposition des Bildpunkts des grafischen Objekts ist,

$c_1$ die gesamte Verschiebung des Bildpunkts des grafischen Objekts in der ersten Phase ist und wobei die Schritte (i) und (ii) so oft wiederholt werden, bis gilt, dass: $t > (t_0 + d_1)$.

Der Parameter x kann dabei z. B. die horizontale Position eines Punktes des grafischen Objekts oder einen Drehwinkel darstellen.

Des Weiteren werden bei der Berechnung der Grafikdaten für aufeinander folgende Zwischenbilder zur Darstellung der Drehung, die aufeinander folgenden Positionen x der Bildpunkte des Objekts, in der zweiten Phase folgende Rechenschritte durchgeführt:

$$(i) \qquad n = \frac{t - t_0}{d_1} - 1 \qquad ;$$

$$(ii) \qquad x = b_2 + c_2 \cdot (1 - n^4) \qquad ,$$

wobei

$t$ eine Systemzeit ist, zu der die erzeugten Grafikdaten auf dem Display dargestellt werden, wobei zu Beginn der Drehung der zweiten Phase $t = t_0$ ist,

$d_2$ die Dauer der zweiten Phase ist,

$b_2$ die Ausgangsposition des Bildpunkts des Objekts ist,

$c_2$ die Gesamtverschiebung des Bildpunkts des Objekts in der zweiten Phase ist und wobei die Schritte (i) und (ii) von der Recheneinheit so oft wiederholt werden, bis gilt: $t > (t_0 + d_2)$.

Des Weiteren ist die Dauer der Gesamtdrehung von besonderer Bedeutung für Erfassbarkeit der dargestellten Information. Bei dem erfindungsgemäßen Verfahren ist die Dauer der Gesamtdrehung in einem Bereich von 0,25 Sekunden bis 2 Sekunden, bevorzugt in einem Bereich von 1,2 Sekunde bis 1,8 Sekunden. Die Dauer der Drehung der ersten Phase ist insbesondere in einem Bereich von 0,25 Sekunden bis 1 Sekunde und bevorzugt in einem Bereich von 0,6 Sekunden bis 0,8 Sekunden, insbesondere 0,7 Sekunden. Ferner ist die Dauer der Drehung der zweiten Phase in einem Bereich von 0,25 Sekunden bis 1 Sekunde, bevorzugt in einem Bereich von 0,6 Sekunden bis 0,8 Sekunden, insbesondere 0,7 Sekunden. Es ist ferner bevorzugt, dass die Dauer der Drehung der ersten Phase der Dauer der Drehung der zweiten Phase entspricht.

Gemäß einer bevorzugten Weiterbildung des erfindungsgemäßen Verfahrens wird die Geschwindigkeit des Kraftfahrzeugs gemessen und die Dauer der Gesamtdrehung bzw. die Dauer der Drehung der ersten und/oder zweiten Phase in Abhängigkeit von der Geschwindigkeit des Kraftfahrzeugs ermittelt. Bevorzugt ist die Dauer der Drehung umso länger, je höher die Geschwindigkeit des Kraftfahrzeugs ist. Bei höheren Geschwindigkeiten kann der Fahrer nämlich seinen Blick nur für kürzere Zeitintervalle auf das Display richten. Ferner ist der Abstand der Zeitintervalle, in denen der Fahrer seinen Blick auf das Display richtet, größer, da der Fahrer bei höheren Geschwindigkeiten seine Aufmerksamkeit stärker auf das Fahrgeschehen richten muss. Die Koppelung der Drehdauer des flächigen Objekts an die Geschwindigkeit des Kraftfahrzeugs stellt somit sicher, das der Fahrer bei höheren Geschwindigkeiten die Orientierung in der Informationsdarstellung behält und die Informationsinhalte auf diese Weise einfach, schnell und intuitiv erfassen kann.

Bei dem erfindungsgemäßen Verfahren kann das Steuersignal, durch welches die Drehung des grafischen Objekts iniziiert wird, von der Eingabe eines Nutzers ausgelöst werden oder automatisch erzeugt werden. Die Eingabe eines Nutzers kann beispielsweise durch eine Berührung des Displays erfolgen. Gemäß einer anderen Ausgestaltung erfolgt die Eingabe durch eine Geste eines Körperteils eines Nutzers, welche vor dem Display ausgeführt wird. Die Geste wird von einer Eingabeeinrichtung oder einer anderen nachgeschalteten Einrichtung erfasst und ausgewertet. Die Geste des Körperteils des Nutzers kann beispielsweise durch eine kapazitive Koppelung zwischen dem Körperteil und einer Empfangseinrichtung erfasst werden. Ferner kann die Geste des Körperteils des Nutzers durch eine Emission von Infrarotstrahlung und eine Reflektion dieser Infrarotstrahlung an dem Körperteil des Nutzers erfasst werden.

Die erfindungsgemäße Anzeigeeinrichtung ist dadurch gekennzeichnet, dass von der Steuereinrichtung die Grafikdaten so veränderbar sind, dass sich das grafische Objekt bei einer perspektivischen Darstellung auf dem Display von einer Seite zu der anderen Seite dreht, wobei bei der Drehung das flächige grafische Objekt immer vollständig zumindest perspektivisch dargestellt wird.

Mit der Steuereinrichtung sind die Grafikdaten insbesondere so veränderbar, dass das grafische Objekt um eine vertikale Achse gedreht wird, die zumindest zu Beginn der Drehung außerhalb des grafischen Objekts liegt oder durch den seitlich äußersten Punkt am Rand des grafischen Objekts verläuft.

Mit der Steuereinrichtung sind insbesondere Grafikdaten für aufeinander folgende Zwischenbilder zur Darstellung der Drehung erzeugbar. Bei der Berechnung der Grafikdaten für aufeinander folgende Zwischenbilder in der ersten bzw. zweiten Phase sind von der Steuereinrichtung insbesondere die vorstehend angegebenen Rechenschritte für die erste bzw. zweite Phase durchführbar. Auch die Dauer für die Drehung für die erste bzw. zweite Phase ist insbesondere innerhalb der vorstehend genannten Bereiche.

Gemäß einer bevorzugten Weiterbildung der erfindungsgemäßen Anzeigeeinrichtung umfasst die Anzeigeeinrichtung eine Schnittstelle zum Empfang von Daten für die Geschwindigkeit des Kraftfahrzeugs. Mit der Steuereinrichtung ist in diesem Fall in Abhängigkeit von diesen Geschwindigkeitsdaten die Dauer der Gesamtdrehung bzw. die Dauer der Drehung der ersten und/oder zweiten Phase ermittelbar.

Gemäß einer Ausgestaltung der erfindungsgemäßen Anzeigeeinrichtung umfasst diese eine Eingabeeinrichtung. Mittels dieser Eingabeeinrichtung kann ein Nutzer beispielsweise ein Steuersignal erzeugen, welches die Drehung des grafischen Objekts auslöst. Bei der Eingabeeinrichtung kann es sich um eine berührungsempfindliche Oberfläche eines Displays handeln. Bevorzugt ist die Eingabeeinrichtung eine Einrichtung zum Erfassen und Auswerten einer Geste eines Körperteils eines Nutzers, welche vor dem Display ausgeführt wird. Hierfür kann die Eingabeeinrichtung insbesondere eine Empfangseinrichtung umfassen, an die ein Signal von dem Körperteil des Nutzers kapazitiv übertragbar ist, wenn sich der Körperteil in der Nähe der Empfangseinrichtung befindet. Mittels dieser kapazitiven Koppelung kann die Position des Körperteils detektiert werden. Aus der zeitlichen Veränderung dieser Position kann auf eine Geste des Nutzers geschlossen werden.

Ferner kann gemäß einer anderen Ausgestaltung die Eingabeeinrichtung eine Infrarotlichtquelle oder einen Empfänger für reflektiertes Infrarotlicht zum Erfassen der Geste des Körperteils des Nutzers umfassen. Auch in diesem Fall wird die Position des Körperteils und deren zeitliche Veränderung erfasst und als Geste interpretiert.

Schließlich betrifft die Erfindung ein Kraftfahrzeug mit der vorstehend beschriebenen Anzeigeeinrichtung.

Die Erfindung wird nun anhand eines Ausführungsbeispiels mit Bezug zu den Zeichnungen erläutert.

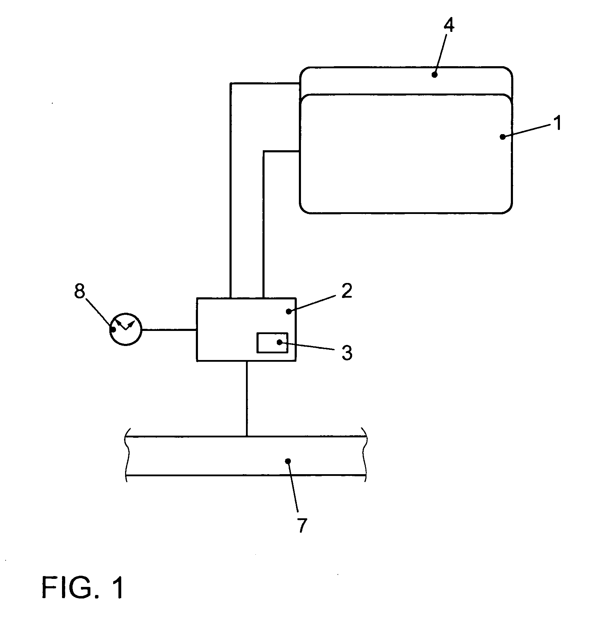

Figur 1         zeigt schematisch ein Ausführungsbeispiel der erfindungsgemäßen Anzeigeeinrichtung und die Verbindung dieser Anzeigeeinrichtung mit anderen Einrichtungen des Kraftfahrzeugs,

die Figuren 2 bis 8     zeigen von einem Ausführungsbeispiel des erfindungsgemäßen Verfahrens erzeugte Anzeigen des Displays, bei denen das grafische Objekt gedreht wird, und

Figur 9          zeigt den zeitlichen Verlauf eines Bildpunkts des grafischen Objekts bei einer Drehung von der in Figur 2 gezeigten Anzeige des Displays zu der in Figur 8 gezeigten Anzeige des Displays.

Die Anzeigeeinrichtung umfasst ein Display 1 zur grafischen Darstellung von Informationen. Bei dem Display 1 kann es sich um ein Matrix-Display handeln, z. B. ein LCD (liquid crystal display), insbesondere ein Farbdisplay in TFT-(thin-film transistor)-Technik. Des Weiteren kann das Display in ein so genanntes twisted nematic-liquid crystal display (TN-LCD), ein super twisted nematic (STN) display, ein Doppelschicht-STN, ein FLC (ferroelectric liquid crystal) Display oder ein SSFLC (surface stabilized ferroelectric liquid crystal) sein. Dem Display 7 ist eine (nicht gezeigte) Hintergrundbeleuchtung zugeordnet, die durch eine oder mehrere lichtemittierende Dioden bereitgestellt werden kann. Das Display 1 ist frei programmierbar, d. h. es lassen sich beliebige Grafikdaten erzeugen, welche auf dem Display 1 dargestellt werden.

Das Display 1 ist insbesondere in einem Bereich des Fahrzeugs befestigt, der zumindest für den Fahrer gut sichtbar ist. Ist die Bedienung der Einrichtungen des Fahrzeugs direkt mit der Anordnung des Displays gekoppelt, so dass der Benutzer z. B. seine Hand oder seinen Finger zumindest in die Nähe des Displays 1 bringen muss, um Eingaben vorzunehmen, ist das Display 1 so angeordnet, dass es der Fahrer des Fahrzeugs leicht mit seiner Hand oder seinem Finger erreichen kann. Beispielsweise kann das Display 1 in der Mittelkonsole des Fahrzeugs untergebracht sein.

Das Display 1 ist mit einer Steuereinrichtung 2 verbunden, mit welcher Grafikdaten für auf dem Display 1 darstellbare grafische Objekte erzeugbar sind. Ferner ist die Steuereinrichtung 2 mit einer Eingabeeinrichtung 4 verbunden, über welche der Benutzer Einrichtungen des Fahrzeugs, deren Informationen auf dem Display 1 angezeigt werden, steuern kann.

Bei der Eingabeeinrichtung 4 kann es sich beispielsweise um eine Einrichtung zum Erfassen und Auswerten einer Geste eines Körperteils eines Nutzers handeln. Beispielsweise kann die Hand des Benutzers vor dem Display 1 die Geste ausführen. Dabei wird die dreidimensionale Position der Hand in einem bestimmten Aufenthaltsbereich vor dem Display 1 erfasst, ohne dass es erforderlich ist, dass das Display 1 berührt wird. Der zugelassene Aufenthaltsbereich hängt von der Anordnung des Displays 1 in dem Kraftfahrzeug ab. Der Bereich sollte so gewählt sein, dass der Aufenthalt der Hand eines Benutzers, in diesem Aufenthaltsbereich eindeutig mit einer Bedienung der Eingabeeinrichtung 4 in Verbindung gebracht werden kann. Die Grenze des Aufenthaltsbereichs kann z. B. 40 cm bis 10 cm vor dem Display 1 liegen. Wird die Hand des Benutzers näher als dieser Schwellwert an das Display 1 heranbewegt, wird dies von der Eingabeeinrichtung 4 erkannt und die Annäherung wird als Bedienabsicht interpretiert. Dies kann z. B. dazu führen, dass die von dem Display 1 angezeigten Objekte anders dargestellt werden. Ferner kann dies als Eingabe interpretiert werden, welche zu einer Drehung des grafischen Objekts führt, wie es später im Detail erläutert wird. Die Eingabeeinrichtung 4 detektiert die Position und die Bewegung der Hand des Benutzers in dem Aufenthaltsbereich. Dabei werden verschiedene, von der Hand ausgeführte Gesten erkannt und als Eingaben interpretiert.

Die Eingabeeinrichtung 4 kann z. B. Infrarotlichtquellen und Infrarotlichtempfänger umfassen, welche das an der Hand reflektiert Infrarotlicht detektieren. Details einer solchen Eingabeeinrichtung sind in der DE 100 58 244 C2 beschrieben, deren diesbezüglicher Offenbarungsgehalt hiermit in die vorliegende Beschreibung aufgenommen wird. Weitere Eingabeeinrichtungen, die in Verbindung mit der Anzeigeeinrichtung eingesetzt werden können, sind in folgenden Veröffentlichungen beschrieben: DE 103 05 341 A1 und DE 10 2004 048 956 A1.

Des Weiteren kann die Position der Hand und deren zeitliche Veränderung auch mittels eines optischen Systems erfasst werden. Bei diesem System emittiert eine lichtemittierende Diode z. B. rechteckförmiges amplitudenmoduliertes Licht. Dieses Licht wird an dem zu detektierenden Objekt, d. h. der Hand, reflektiert und gelangt nach der Reflexion zu einer Fotodiode. Eine weitere lichtemittierende Diode emittiert ebenfalls rechteckförmiges amplitudenmoduliertes Licht zur Fotodiode, welches jedoch um 180° phasenversetzt ist. Bei der Fotodiode überlagern sich die beiden Lichtsignale und heben sich auf, falls sie genau die gleiche Amplitude aufweisen. Falls sich die Signale bei der Fotodiode nicht aufheben, wird die Lichtemission der zweiten Diode über einen Regelkreis so geregelt, dass sich das Gesamtempfangssignal wieder zu Null ergänzt. Ändert sich die Position des Objekts, ändert sich auch der Lichtanteil, welcher von der ersten lichtemittierenden Diode zur Fotodiode über die Reflexion an dem Objekt gelangt. Dies bewirkt ein Nachführen der Intensität der zweiten lichtemittierenden Diode durch den Regelkreis. Das Regelsignal ist somit ein Maß für die Reflexion des Lichts, welches von der ersten Diode emittiert wird, an dem Objekt. Auf diese Weise lässt sich aus dem Regelsignal ein Signal ableiten, welches für die Position des Objekts charakteristisch ist.

Des Weiteren kann die Eingabeeinrichtung eine berührungsempfindliche Folie sein, die auf dem Display 1 vorgesehen ist. Mit der Folie kann die Position einer Berührung des hinter der Folie angeordneten Displays 1 detektiert werden. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von dem Finger eines Benutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position einem auf dem Display 1 angezeigten grafischen Objekt zugeordnet werden. Des Weiteren können Gleitbewegungen des Fingers über die Folie interpretiert werden. Insbesondere kann der Benutzer auf diese Weise eine Linie auf dem Display 1 definieren, indem er an einem Punkt die Folie berührt, zu einem anderen Punkt hin auf der Folie gleitet und den Finger bei dem anderen Punkt von der Folie wegnimmt.

Schließlich kann als Eingabeeinrichtungen ein abgesetztes Bedienelement eingesetzt werden. Bei dem abgesetzten Bedienelement handelt es sich insbesondere um ein mechanisches Bedienelement. Beispielsweise kann ein Drehschalter vorgesehen sein, durch den auf dem Display angezeigte Objekte ansteuerbar und durch Drücken des Drehschalters auswählbar sind. Ferner kann durch den Drehschalter auch direkt ein Drehwinkel eingegeben werden, wie es später erläutert wird. Zusätzlich können um den Drehschalter herum separate Druckschalter angeordnet sein, wobei die Anordnung von Anzeigefeldern auf dem Display, die den Druckschaltern zugeordnet sind, zumindest schematisch der Anordnung der Druckschalter entspricht. Das erfindungsgemäße Informationssystem kann beispielsweise eine Multifunktionsbedienvorrichtung umfassen, wie sie in der EP 1 212 208 B1 beschrieben ist.

Die Steuereinrichtung 2 ist ferner mit einer Systemuhr 8 und mit einem Fahrzeugbus 7 gekoppelt. Über den Fahrzeugbus 7 ist die Steuereinrichtung 2 mit Fahrerassistenzsystemen des Fahrzeugs verbunden. Die Steuereinrichtung 2 erhält über den Fahrzeugbus 7 Daten dieser Fahrerassistenzsysteme und bereitet die so auf, dass diese Daten dem Fahrer bzw. den Fahrzeuginsassen über das Display 1 grafisch dargestellt werden. Die Steuereinrichtung 2 erzeugt hierfür Grafikdaten für auf dem Display 1 darstellbare Objekte, welche unter anderem die Informationen der Fahrerassistenzsysteme grafisch darstellen. Ferner ist die Steuereinrichtung 2 über den Fahrzeugbus 7 mit verschiedenen Informations- und Kommunikations- sowie Unterhaltungseinrichtungen des Fahrzeugs verbunden. Die vielfältigen Informationen dieser Einrichtungen des Fahrzeugs werden in der Steuereinrichtung 2 aufbereitet und in Grafikdaten für eine grafische Darstellung umgewandelt. Für Animationen der grafischen Darstellung auf dem Display umfasst die Steuereinrichtung eine Recheneinheit 3, welche beim Erzeugen von Zwischenbildern auf die Systemuhr 8 zurückgreift.

Im Folgenden wird die Informationsanzeige in dem Fahrzeug auf dem Display 1 im Detail erläutert:

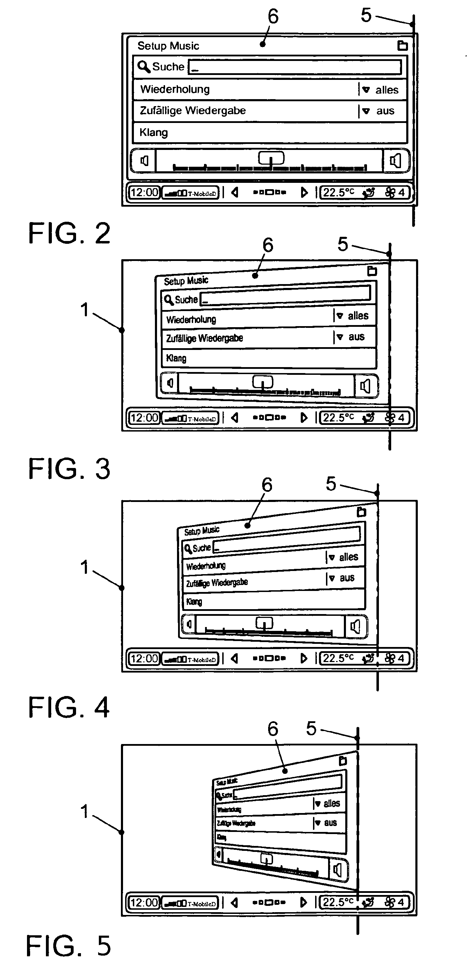

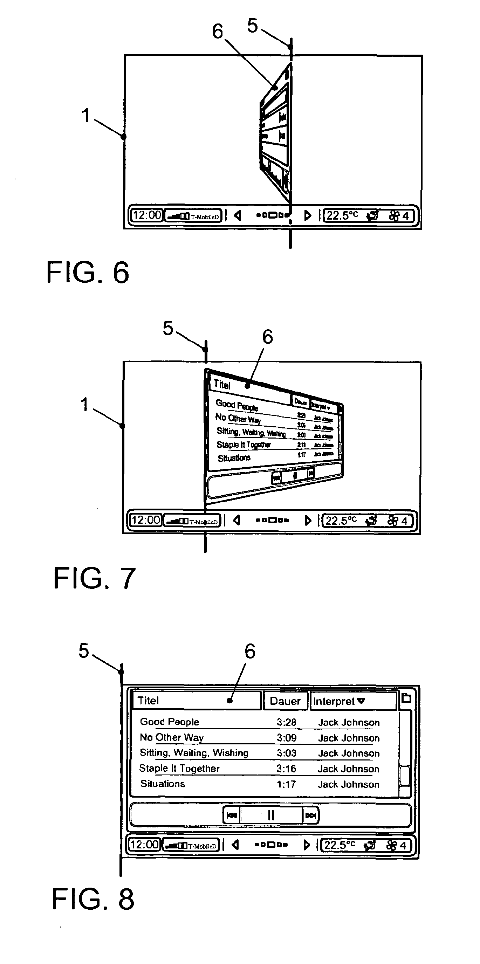

Bei dem von dem Display 1 angezeigten Objekt 6 handelt es sich um eine grafische Darstellung einer Fläche, welche in zumindest einer Richtung die vollständige Größe des Displays 1 ausfüllt. Bei dem im Folgenden beschriebenen Beispiel füllt das grafische Objekt 6 das Display 1 vollständig aus. Das grafische Objekt 6 stellt bei einer ersten Darstellung, die in Figur 2 wiedergegeben ist, eine Seite des Objekts dar und in einer zweiten Darstellung, die in Figur 8 wiedergegeben ist, die andere Seite des Objekts dar. Auf beiden Seiten werden verschiedene Informationen dargestellt. Auf der Seite, die in Figur 2 wiedergegeben ist, wird ein Bedienfeld im Einstellungsmodus wiedergegeben. Über die Eingabeeinrichtung 4 kann der Nutzer bei dieser Darstellung Detaileinstellungen einer bestimmten Anwendung vornehmen. Das Bedienfeld auf der anderen Seite des grafischen Objekts 6, das in Figur 8 dargestellt ist, betrifft einen Bedienmodus, in dem eine Anwendung bedient werden kann.

Um von der in Figur 2 gezeigten Ansicht zu der in Figur 8 gezeigten Ansicht zu gelangen, kann der Nutzer mittels der Eingabeeinrichtung 4 eine Eingabe tätigen und damit ein entsprechendes Steuersignal zum Drehen des grafischen Objekts 6 auslösen. In Abhängigkeit von diesem Steuersignal wird die Darstellung des grafischen Objekts 6 so verändert, dass sich das grafische Objekt 6 bei einer perspektivischen Darstellung auf dem Display 1 von einer Seite zu der anderen Seite dreht. Für die Darstellung der Drehung werden von der Recheneinheit 3 der Steuereinrichtung 2 Zwischenbilder erzeugt. Ein Teil dieser Zwischenbilder ist in den Figuren 3 bis 7 gezeigt.

Für die Wiedergabe der Drehung werden die Grafikdaten, die zur Anzeige auf dem Display 1 führen, so verändert, dass das grafische Objekt 6 um eine vertikale Achse 5 gedreht wird. Zu Beginn der Drehung, d. h. bei der in Figur 2 gezeigten Anzeige, fällt die vertikale Achse 5 mit der rechten vertikalen Seitenkante des grafischen Objekts 6 zusammen. Im Verlauf der Drehung wird die vertikale Achse 5 in horizontaler Richtung vom rechten Rand des Displays 1 zum linken Rand des Displays 1 verschoben. Gleichzeitig wird das grafische Objekt 6 um die vertikale Achse 5 gedreht, wie es in den Figuren 2 bis 8 gezeigt ist. Nach einer Drehung um 180° befindet sich die vertikale Achse 5 am linken Rand des Displays 1 und von dem grafischen Objekt 6 wird die andere Seite gezeigt. Dabei ist die horizontale Verschiebung der vertikalen Achse 5 linear mit der Drehung des grafischen Objekts 6 synchronisiert.

Die Wiedergabe der Drehung bei dem erfindungsgemäßen Verfahren zeichnet sich dadurch aus, dass das grafische Objekt 6 bei der Drehung immer vollständig zumindest perspektivisch dargestellt wird. Zwar verkleinert sich die Fläche, welche das grafische Objekt 6 auf dem Display 1 einnimmt, während der Drehung aufgrund der perspektivischen Darstellung, jedoch ist das grafische Objekt 6 immer vollständig perspektivisch zu sehen. Nach einer Drehung um 90° ist zwar nur noch die virtuelle Seitenkante des flächigen grafischen Objekts 6 zu sehen, dies entspricht jedoch der korrekten perspektivischen Darstellung des um 90° gedrehten Objekts 6. Auch in diesem Fall ist somit das Objekt 6 vollständig perspektivisch dargestellt. In der Endstellung nach einer Drehung von 180° ist eine Seite des grafischen Objekts 6 wieder vollständig sichtbar. Das grafische Objekt 6 füllt das Display 1 in dieser Einstellung wieder vollständig aus.

Bei dem vorstehend beschriebenen Verfahren zum Drehen des grafischen Objekts 6 ist der Übergang zwischen zwei statischen Darstellungen auf dem Display 1, bei denen die Vorder- bzw. Rückseite des Objekts 6 gezeigt werden, von besonderer Bedeutung. Da die Anzeigeeinrichtung nämlich in einem Kraftfahrzeug untergebracht ist, ist es besonders wichtig, dass insbesondere der Fahrer des Kraftfahrzeugs die auf dem Display 1 dargestellten Informationen schnell, einfach und intuitiv erfassen kann, selbst wenn er nur für kurze Zeitintervalle seinen Blick auf das Display 1 richtet. Dabei ist es besonders wichtig, dass der Betrachter jederzeit gut zwischen den beiden Anzeigeseiten unterscheiden kann. Es hat sich ergeben, dass abrupte Wechsel von Anzeigebildern hierfür nachteilhaft sind. Es hat sich insbesondere herausgestellt, dass fließende Übergänge zwischen zwei statischen Darstellungen, bei denen Zwischenbilder angezeigt werden, welche den Übergang zwischen den zwei statischen Darstellungen verdeutlichen, die Orientierung in der Struktur sowie die Erfassbarkeit des Informationsinhalts erleichtern.

Ferner ist besonders wichtig, wie die Zwischenbilder den Übergang zwischen zwei statischen Darstellungen visualisieren. Dabei hat sich herausgestellt, dass ein nichtlinearer Übergang von einer statischen Darstellung zur nächsten statischen Darstellung bei der Anwendung in einem Kraftfahrzeug vorteilhaft ist. Es sind insbesondere Zwischenbilder, welche eine Bewegung der Objekte 6 veranschaulichen, die beschleunigt und abgebremst wird, von Vorteil. Auch sind die Parameter für die Wahl der Beschleunigung und die Dauer des Übergangs an die Anwendung im Fahrzeug anzupassen, so dass herkömmliche, aus dem Computerbereich bekannte Animationen zumeist nicht verwendbar sind.

Im Folgenden wird im Detail beschrieben, wie das grafische Objekte 6 in zeitlicher Hinsicht gedreht wird:

Die Drehung des grafischen Objekts 6 wird in zwei Phasen unterteilt. Bei der ersten Phase wird das Objekt 6 von einer in Figur 2 gezeigten Ausgangsstellung um 90° in eine Neutralstellung gedreht, bei welcher nur noch die seitliche Stirnfläche des grafischen Objekts 6 sichtbar ist. In einer zweiten Phase wird das grafische Objekt weiter bis zu einem Drehwinkel von 180° gedreht, bis die andere in Figur 8 gezeigte Seite des grafischen Objekts 6 sichtbar ist. Während der Drehung wird weiterhin die jeweils sichtbare Seite des grafischen Objekts 6 auf der jeweiligen Fläche perspektivisch dargestellt. Die perspektivische Darstellung der Drehung erfolgt dabei so, dass der Betrachter direkt auf das grafische Objekt 6 schaut, d. h. die Betrachtungsrichtung für die perspektivische Darstellung parallel zur Normalen des Displays 1 verläuft.

Nimmt man beispielsweise an, dass die Breite des Displays 1 und des grafischen Objekts 6 800 Bildpunkte ist, und bezeichnet man die Punkte am rechten Rand des grafischen Objekts 6 mit 0, wandern die Bildpunkte des rechten Rands des grafischen Objekts 6 bei der Bewegung zunächst in der ersten Phase bis zum Bildpunkt 400 in der Mitte des Displays 1 und von dort bis zum Bildpunkt 800 am linken Rand des Displays 1. Gleichermaßen kann man den Drehwinkel betrachten, um den das grafische Objekt 6 um die vertikale Achse 5 gedreht worden ist. Bei der in Figur 2 gezeigten Darstellung ist der Drehwinkel 0°, bei der in Figur 6 gezeigten Darstellung ist der Drehwinkel etwas unter 90° und bei der in Figur 8 gezeigten Anzeige ist der Drehwinkel 180°. Im Folgenden wird die Parametrisierung der Drehbewegung anhand der Position x beschrieben, die beispielsweise die Lage der vertikalen Achse 5 oder eines Bildpunktes des Objekts 6 in horizontaler Richtung wiedergeben kann. Da die Bewegung der vertikalen Achse 5 mit der Drehbewegung linear synchronisiert ist, kann die Position x auch als Drehwinkel interpretiert werden, der von 0° bis 180° läuft.

Die Drehung des grafischen Objekts 6 wird durch aufeinander folgende Zwischenbilder dargestellt, die aufeinander folgende Positionen der Bildpunkte des grafischen Objekts 6 anzeigen. Bei der Berechnung der Grafikdaten für diese Positionen x werden in der ersten Phase folgende Rechenschritte durchgeführt:

$$(i) \qquad n = \frac{t - t_0}{d_1} \qquad ;$$

$$(ii) \qquad x = b_1 + c_1 \cdot n^4 \qquad ,$$

wobei

$t$ eine Systemzeit ist, zu der die erzeugten Grafikdaten auf dem Display 1 dargestellt werden, wobei zu Beginn der Drehung der ersten Phase $t = t_0$ ist,

$d_1$ die Dauer der ersten Phase ist,

$b_1$ die Ausgangsposition des Bildpunkts des grafischen Objekts 6 ist,

$c_1$ die gesamte Verschiebung des Bildpunkts des grafischen Objekts 6 in der ersten Phase ist und wobei die Schritte (i) und (ii) so oft wiederholt werden, bis $t > (t_0 + d_1)$.

Für die zweite Phase werden folgende Rechenschritte durchgeführt:

$$(i) \qquad n = \frac{t - t_0}{d_1} - 1 \qquad ;$$

$$(ii) \qquad x = b_2 + c_2 \cdot (1 - n^4) \qquad ,$$

wobei

t eine Systemzeit ist, zu der die erzeugten Grafikdaten auf dem Display 1 dargestellt werden, wobei zu Beginn der Drehung der zweiten Phase $t = t_0$ ist,

$d_2$ die Dauer der zweiten Phase ist,

$b_2$ die Ausgangsposition des Bildpunkts des grafischen Objekts 6 ist,

$c_2$ die Gesamtverschiebung des Bildpunkts des grafischen Objekts 6 in der zweiten Phase ist und

wobei die Schritte (i) und (ii) so oft wiederholt werden, bis gilt: $t > (t_0 + d_2)$.

Die Rechenschritte werden von der Recheneinheit 3 der Steuereinrichtung 2 ausgeführt, wobei der Recheneinheit 3 von der Systemuhr 8 die Systemzeit t übertragen wird.

Die Dauer $d_1$ der Drehung der ersten Phase ist in einem Bereich von 0,25 Sekunden bis 1 Sekunde, insbesondere in einem Bereich von 0,6 Sekunden bis 0,8 Sekunden. Gleichermaßen ist die Dauer der Drehung der zweiten Phase in einem Bereich von 0,25 Sekunden bis 1 Sekunde, insbesondere in einem Bereich von 0,6 Sekunden bis 0,8 Sekunden.

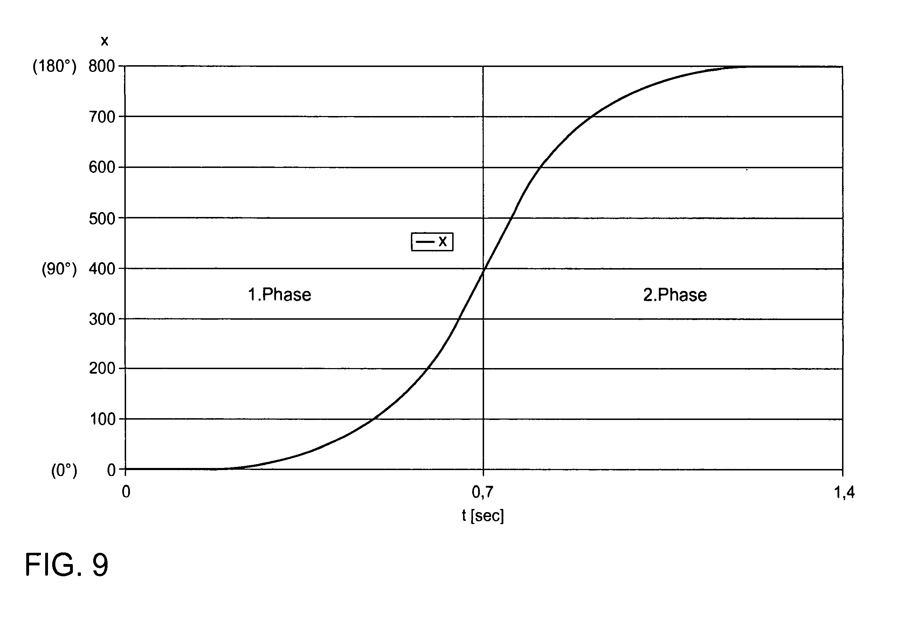

In Figur 9 ist der zeitliche Verlauf eines Bildpunktes während der Drehung um 180° gezeigt. Der Bildpunkt des rechten Randes des grafischen Objekts 6 wandert von der Position 0 über die Neutralstellung bei der Position 400 bis zum rechten Rand des grafischen Objekts 6 beim Bildpunkt 800. Wie aus Figur 9 ersichtlich, wird der Bildpunkt in der ersten Phase beschleunigt und in der zweiten Phase abgebremst. Die Dauer der Drehung betrug dabei für jede Phase 0,7 Sekunden, so dass die Drehung um 180° in 1,4 Sekunden ausgeführt wurde.

Gemäß einer Weiterbildung des Ausführungsbeispiels werden in der Steuereinrichtung 2 und damit der Recheneinheit 3 über den Fahrzeugbus 7 die Daten des Geschwindigkeitsmessers des Kraftfahrzeugs übertragen. Diese Daten werden von der Recheneinheit 3 verwendet, um die Dauer der Drehung für die beiden Phasen zu ermitteln. Dabei ist die Dauer der Gesamtdrehung umso länger, je höher die Geschwindigkeit des Kraftfahrzeugs ist.

Von der in Figur 8 gezeigten Darstellung des grafischen Objekts 6 kann der Nutzer wieder durch eine Eingabe mittels der Eingabeeinrichtung 4 zurück zu der in Figur 2 gezeigten Darstellung der anderen Seite des grafischen Objekts 6 gelangen. In diesem Fall wird das grafische Objekt 6 wieder um 180° gedreht. Es kann in diesem Fall entweder erneut eine Drehung um eine vertikale Achse am rechten Rand des Displays 1 erfolgen, die bei der Drehung von der rechten Seite des Displays 1 zur linken Seite des Displays 1 verschoben wird. Bei dem vorliegenden Ausführungsbeispiel wird die zuvor im Detail beschriebene Drehung jedoch umgekehrt, so dass die Drehung um eine vertikale Achse gezeigt wird, die sich zunächst am linken Rand des Displays 1 befindet und die im Verlauf der Drehung zum rechten Rand verschoben wird.

## BEZUGSZEICHENLISTE

| 1 | Display |
|---|---|
| 2 | Steuereinrichtung |
| 3 | Recheneinheit |
| 4 | Eingabeeinrichtung |
| 5 | Drehachse |
| 6 | Objekt |
| 7 | Fahrzeugbus |
| 8 | Systemuhr |

**Patentansprüche**

1. Verfahren zum Anzeigen von Informationen in einem Kraftfahrzeug, bei dem

   - zumindest ein flächiges Objekt (6) in einer ersten Darstellung, welche eine Seite des Objekts (6) zeigt, und in einer zweiten Darstellung, welche die andere Seite des Objekts (6) zeigt, mittels eines in dem Kraftfahrzeug befestigten Displays (1) grafisch dargestellt wird,
   - wobei auf den jeweiligen Seiten des flächigen grafischen Objekts (6) verschiedene Informationen dargestellt werden und
   - wobei sich das grafische Objekt (6) in der ersten und/oder zweiten Darstellung in zumindest einer Richtung im Wesentlichen über die vollständige Größe des Displays (1) erstreckt,
   **dadurch gekennzeichnet,**
   - **dass** in Abhängigkeit von einem Steuersignal die Darstellung des grafischen Objekts (6) so verändert wird, dass sich das grafische Objekt (6) bei einer perspektivischen Darstellung auf dem Display (1) von einer Seite zu der anderen Seite dreht,
   - wobei bei der Drehung das flächige grafische Objekt (6) immer vollständig zumindest perspektivisch dargestellt wird und
   - wobei die vertikale Achse (5) bei der Drehung in horizontaler Richtung verschoben wird und gleichzeitig das graphische Objekt (6) um die vertikale Achse (5) gedreht wird, so dass nach einer Drehung um 180° die vertikale Achse (5) die Position bei der zweiten Darstellung erreicht hat.

2. Verfahren nach Anspruch 1,
   **dadurch gekennzeichnet,**
   **dass** in Abhängigkeit von einem Steuersignal die Darstellung des grafischen Objekts (6) so verändert wird, dass das grafische Objekt (6) um ein vertikale Achse (5) gedreht wird, die zumindest zu Beginn der Drehung außerhalb des grafischen Objekts (6) liegt oder durch den seitlich äußersten Punkt am Rand des grafischen Objekts (6) verläuft.

3. Verfahren nach Anspruch 1 oder 2,
   **dadurch gekennzeichnet,**
   **dass** in Abhängigkeit von einem Steuersignal die Darstellung des grafischen Objekts (6) so verändert wird, dass die horizontale Verschiebung der vertikalen Achse (5) linear mit der Drehung des graphischen Objekts (6) synchronisiert ist.

4. Verfahren nach einem der vorhergehenden Ansprüche,
   dass die Drehung in eine erste Phase, bei der Bildpunkte des grafischen Objekts (6) beschleunigt bewegt werden, und eine zweite Phase, bei der Bildpunkte des grafischen Objekts abgebremst bewegt werden, unterteilt wird.

5. Verfahren nach Anspruch 4,
   **dadurch gekennzeichnet,**
   **dass** die erste Phase einem Drehwinkel des grafischen Objekts (6) von 0° bis 90° entspricht und die zweite Phase einem Drehwinkel des grafischen Objekts (6) von 90° bis 180° entspricht.

6. Verfahren nach einem der Ansprüche 4 oder 5,
   **dadurch gekennzeichnet,**
   **dass** bei der Berechnung der Grafikdaten für aufeinander folgende Zwischenbilder zur Darstellung der Drehung die aufeinander folgenden Positionen x der Bildpunkte des Objekts (6) in der ersten Phase folgende Rechenschritte durchgeführt werden:

$$\text{(i)} \qquad n = \frac{t - t_0}{d_1} \qquad ;$$

$$\text{(ii)} \qquad x = b_1 + c_1 \cdot n^4 \qquad ,$$

wobei

t eine Systemzeit ist, zu der die erzeugten Grafikdaten auf dem Display (1) dargestellt werden, wobei zu Beginn der Drehung der ersten Phase $t = t_0$ ist,

$d_1$ die Dauer der ersten Phase ist,

$b_1$ die Ausgangsposition des Bildpunkts des grafischen Objekts (6) ist,

$c_1$ die gesamte Verschiebung des Bildpunkts des grafischen Objekts (6) in der ersten Phase ist und wobei die Schritte (i) und (ii) so oft wiederholt werden, bis gilt: $t > (t_0 + d_1)$.

7. Verfahren nach einem der Ansprüche 4 bis 6,

**dadurch gekennzeichnet,**

**dass** bei der Berechnung der Grafikdaten für aufeinander folgende Zwischenbilder zur Darstellung der Drehung, die aufeinander folgenden Positionen x der Bildpunkte des Objekts (6), in der zweiten Phase folgende Rechenschritte durchgeführt werden:

$$(i) \qquad n = \frac{t - t_0}{d_1} - 1 \quad ;$$

$$(ii) \qquad x = b_2 + c_2 \cdot (1 - n^4) \quad ,$$

wobei

t eine Systemzeit ist, zu der die erzeugten Grafikdaten auf dem Display (1) dargestellt werden, wobei zu Beginn der Drehung der zweiten Phase $t = t_0$ ist,

$d_2$ die Dauer der zweiten Phase ist,

$b_2$ die Ausgangsposition des Bildpunkts des grafischen Objekts (6) ist,

$c_2$ die Gesamtverschiebung des Bildpunkts des grafischen Objekts (6) in der zweiten Phase ist und wobei die Schritte (i) und (ii) von der Recheneinheit so oft wiederholt werden, bis gilt: $t > (t_0 + d_2)$.

8. Verfahren nach einem der vorhergehenden Ansprüche,

**dadurch gekennzeichnet,**

**dass** die Geschwindigkeit des Kraftfahrzeugs gemessen wird und dass die Dauer der Gesamtdrehung und/oder die Dauer der Drehung der ersten und/oder zweiten Phase in Abhängigkeit von der Geschwindigkeit des Kraftfahrzeugs ermittelt wird.

9. Anzeigeeinrichtung für ein Kraftfahrzeug mit,

- einem Display (1) zur grafischen Darstellung von Informationen, das in dem Kraftfahrzeug befestigt ist,
- einer Steuereinrichtung (2), mit welcher Graphikdaten erzeugbar sind, die zumindest ein auf dem Display (1) darstellbares flächiges grafisches Objekt (6) in einer ersten Darstellung, welche eine Seite des Objekts zeigt, und in einer zweiten Darstellung, welche die andere Seite des Objekts zeigt, darstellen,
- wobei auf den jeweiligen Seiten des flächigen grafischen Objekts (6) verschiedene Informationen dargestellt werden und
- wobei sich das grafische Objekt (6) in der ersten und/oder zweiten Darstellung in zumindest einer Richtung im Wesentlichen über die vollständige Größe des Displays (1) erstreckt,

**dadurch gekennzeichnet, dass**

- von der Steuereinrichtung (2) die Grafikdaten so veränderbar sind, dass sich das grafische Objekt (6) bei einer perspektivischen Darstellung auf dem Display (1) von einer Seite zu der anderen Seite dreht,
- wobei bei der Drehung das flächige grafische Objekt (6) immer vollständig zumindest perspektivisch dargestellt wird und
- wobei die vertikale Achse (5) bei der Drehung in horizontaler Richtung verschoben wird und gleichzeitig das graphische Objekt (6) um die vertikale Achse gedreht wird, so dass nach einer Drehung um 180° die vertikale Achse die Position bei der zweiten Darstellung erreicht hat.

**10.** Anzeigeeinrichtung nach Anspruch 9,
**dadurch gekennzeichnet,**
**dass** mit der Steuereinrichtung (2) die Grafikdaten so veränderbar sind, dass das grafische Objekt (6) um ein vertikale Achse (5) gedreht wird, die zumindest zu Beginn der Drehung außerhalb des grafischen Objekts (6) liegt oder durch den seitlich äußersten Punkt am Rand des grafischen Objekts (6) verläuft.

**11.** Anzeigeeinrichtung nach einem der Ansprüche 9 oder 10,
**dadurch gekennzeichnet,**
**dass** die Drehung in eine erste Phase, bei der Bildpunkte des grafischen Objekts (6) beschleunigt bewegt werden, und eine zweite Phase, bei der Bildpunkte des grafischen Objekts abgebremst bewegt werden, unterteilt ist.

**12.** Anzeigeeinrichtung nach Anspruch 11,
**dadurch gekennzeichnet,**
**dass** bei der Berechnung der Grafikdaten für aufeinander folgende Zwischenbilder zur Darstellung der Drehung die aufeinander folgenden Positionen x der Bildpunkte des grafischen Objekts (6) in der ersten Phase von der Recheneinheit (3) folgende Rechenschritte durchführbar sind:

$$\text{(i)} \qquad n = \frac{t - t_0}{d_1} \qquad ;$$

$$\text{(ii)} \qquad x = b_1 + c_1 \cdot n^4 \qquad ,$$

wobei
t eine Systemzeit ist, zu der die erzeugten Grafikdaten auf dem Display (1) dargestellt werden, wobei zu Beginn der Drehung der ersten Phase $t = t_0$ ist,
$d_1$ die Dauer der ersten Phase ist,
$b_1$ die Ausgangsposition des Bildpunkts des grafischen Objekts (6) ist,
$c_1$ die gesamte Verschiebung des Bildpunkts des grafischen Objekts (6) in der ersten Phase ist und
wobei die Schritte (i) und (ii) von der Recheneinheit (3) so oft wiederholt werden, bis gilt: $t > (t_0 + d_1)$.

**13.** Anzeigeeinrichtung nach Anspruch 11 oder 12,
**dadurch gekennzeichnet,**
**dass** bei der Berechnung der Grafikdaten für aufeinander folgende Zwischenbilder zur Darstellung der Drehung die aufeinander folgenden Positionen x der Bildpunkte des grafischen Objekts (6) in der zweiten Phase von der Recheneinheit (3) folgende Rechenschritte durchführbar sind:

$$\text{(i)} \qquad n = \frac{t - t_0}{d_1} - 1 \qquad ;$$

$$\text{(ii)} \qquad x = b_2 + c_2 \cdot (1 - n^4) \qquad ,$$

wobei
t eine Systemzeit ist, zu der die erzeugten Grafikdaten auf dem Display (1) dargestellt werden, wobei zu Beginn der Drehung der zweiten Phase $t = t_0$ ist,
$d_2$ die Dauer der zweiten Phase ist,

$b_2$ die Ausgangsposition des Bildpunkts des grafischen Objekts (6) ist,
$c_2$ die Gesamtverschiebung des Bildpunkts des grafischen Objekts (6) in der zweiten Phase ist und
wobei die Schritte (i) und (ii) von der Recheneinheit (3) so oft wiederholt werden, bis gilt: $t > (t_0 + d_2)$.

**14.** Anzeigeeinrichtung nach einem der Ansprüche 9 bis 13,
**dadurch gekennzeichnet,**
**dass** die Anzeigeeinrichtung eine Schnittstelle zum Empfang von Daten für die Geschwindigkeit des Kraftfahrzeugs umfasst und dass mit der Steuereinheit in Abhängigkeit von diesen Geschwindigkeitsdaten die Dauer der Gesamtdrehung und/oder die Dauer der Drehung für die erste und/oder zweite Phase ermittelbar ist.

**15.** Kraftfahrzeug mit einer Anzeigeeinrichtung nach einem der Ansprüche 9 bis 14.


**Claims**

**1.** Method for displaying information in a motor vehicle, in which

- at least one flat object (6) is displayed graphically in a first representation which shows one side of the object (6) and in a second representation which shows the other side of the object (6), by means of a display (1) which is mounted in the motor vehicle,
- wherein various information items are displayed on the respective sides of the flat graphic object (6), and
- wherein the graphic object (6) extends in at least one direction in the first and/or second representation, essentially over the entire size of the display (1),
**characterized**
- **in that** as a function of a control signal the representation of the graphic object (6) is changed in such a way that in the case of a perspective representation on the display (1) the graphic object (6) rotates from one side to the other side,
- wherein during the rotation the flat graphic object (6) is always represented completely at least in a perspective sense, and
- wherein the vertical axis (5) is shifted in the horizontal direction during the rotation and at the same time the graphic object (6) is rotated about the vertical axis (5) with the result that after a rotation about 180° the vertical axis (5) has reached the position in the second representation.

**2.** Method according to Claim 1,
**characterized**
**in that** as a function of a control signal the representation of the graphic object (6) is changed in such a way that the graphic object (6) is rotated about a vertical axis (5) which, at least at the start of the rotation, is located outside the graphic object (6) or runs through the laterally outermost point at the edge of the graphic object (6).

**3.** Method according to Claim 1 or 2,
**characterized**
**in that** as a function of a control signal the representation of the graphic object (6) is changed in such a way that the horizontal shifting of the vertical axis (5) is synchronized linearly with the rotation of the graphic object (6).

**4.** Method according to one of the preceding claims,
**characterized**
**in that** the rotation is divided into a first phase in which pixels of the graphic object (6) are moved in an accelerated fashion, and a second phase in which pixels of the graphic object are moved in a slowed-down fashion.

**5.** Method according to Claim 4,
**characterized**
**in that** the first phase corresponds to a rotational angle of the graphic object (6) from 0° to 90°, and the second phase corresponds to a rotational angle of the graphic object (6) from 90° to 180°.

**6.** Method according to one of Claims 4 and 5,
**characterized**
**in that** during the calculation of the graphic data for successive intermediate images for representing the rotation, the successive positions x of the pixels of the object (6) in the first phase are obtained by the following computational

steps:

$$(i) \qquad n = \frac{t - t_0}{d_1} \qquad ; $$

$$(ii) \qquad x = b_1 + c_1 \cdot n^4 \qquad .$$

where
t is a system time at which the generated graphic data are represented on the display (1), wherein t = to at the start of the rotation of the first phase,
$d_1$ is the duration of the first phase,
$b_1$ is the starting position of the pixel of the graphic object (6),
$c_1$ is the entire shifting of the pixel of the graphic object (6) in the first phase, and
wherein the steps (i) and (ii) are repeated until the following applies:

$$t > (t_0 + d_1).$$

7. Method according to one of Claims 4 to 6,
**characterized**
**in that** during the calculation of the graphic data for successive intermediate images for representing the rotation, the successive positions x of the pixels of the object (6) in the second phase are obtained by the following computational steps:

$$(i) \qquad n = \frac{t - t_0}{d_1} - 1 \qquad ;$$

$$(ii) \qquad x = b_2 + c_2 \cdot (1 - n^4) \qquad .$$

where
t is a system time at which the generated graphic data are represented on the display (1), wherein t = to at the start of the rotation of the second phase,
$d_2$ is the duration of the second phase,
$b_2$ is the starting position of the pixel of the graphic object (6),
$c_2$ is the entire shifting of the pixel of the graphic object (6) in the second phase, and
wherein the steps (i) and (ii) are repeated by the computational unit until the following applies: $t > (t_0 + d_2)$.

8. Method according to one of the preceding claims,
**characterized**
**in that** the speed of the motor vehicle is measured, and in that the duration of the total rotation and/or the duration of the rotation of the first and/or second phase is determined as a function of the speed of the motor vehicle.

9. Display device for a motor vehicle, having

- a display (1) for graphically representing information, which display (1) is mounted in the motor vehicle,
- a control device (2) with which graphic data can be generated, which data represent at least one flat graphic object (6), which can be represented on the display (1), in a first representation which shows one side of the object and in a second representation which shows the other side of the object,
- wherein various information items are represented on the respective sides of the flat graphic object (6) and
- wherein in the first and/or second representation the graphic object (6) extends essentially over the entire size of the display (1) in at least one direction,
**characterized**
- **in that** the control device (2) can change the graphic data in such a way that in the case of a perspective representation on the display (1) the graphic object (6) rotates from one side to the other side,
- wherein during the rotation the flat graphic object (6) is always represented completely at least in a perspective sense, and
- wherein the vertical axis (5) is shifted in the horizontal direction during the rotation and at the same time the graphic object (6) is rotated about the vertical axis with the result that after a rotation about 180° the vertical axis has reached the position in the second representation.

10. Display device according to Claim 9,
**characterized**
**in that** the control device (2) can change the graphic data in such a way that the graphic object (6) is rotated about a vertical axis (5) which, at least at the start of the rotation, is located outside the graphic object (6) or runs through the laterally outermost point at the edge of the graphic object (6).

11. Display device according to one of Claims 9 and 10,
**characterized**
**in that** the rotation is divided into a first phase in which pixels of the graphic object (6) are moved in an accelerated fashion, and a second phase in which pixels of the graphic object are moved in a slowed-down fashion.

12. Display device according to Claim 11,
**characterized**
**in that** during the calculation of the graphic data for successive intermediate images for representing the rotation, the successive positions x of the pixels of the graphic object (6) in the first phase can be obtained by the computational unit (3) by the following computational steps:

$$\text{(i)} \qquad n = \frac{t - t_0}{d_1} \qquad ;$$

$$\text{(ii)} \qquad x = b_1 + c_1 \cdot n^4 \qquad .$$

where
t is a system time at which the generated graphic data are represented on the display (1), wherein $t = t_0$ at the start of the rotation of the first phase,
$d_1$ is the duration of the first phase,
$b_1$ is the starting position of the pixel of the graphic object (6),
$c_1$ is the entire shifting of the pixel of the graphic object (6) in the first phase, and
wherein the steps (i) and (ii) are repeated by the computational unit (3) until the following applies: $t > (t_0 + d_1)$.

13. Display device according to Claim 11 or 12,
**characterized**
**in that** during the calculation of the graphic data for successive intermediate images for representing the rotation, the successive positions x of the pixels of the graphic object (6) in the second phase can be obtained by the computational unit (3) by the following computational steps:

$$\text{(i)} \qquad n = \frac{t - t_0}{d_1} - 1 \qquad ;$$

$$\text{(ii)} \qquad x = b_2 + c_2 \cdot (1 - n^4) \qquad .$$

where

t is a system time at which the generated graphic data are represented on the display (1), wherein $t = t_0$ at the start of the rotation of the second phase,

$d_2$ is the duration of the second phase,

$b_2$ is the starting position of the pixel of the graphic object (6),

$c_2$ is the entire shifting of the pixel of the graphic object (6) in the second phase, and

wherein the steps (i) and (ii) are repeated by the computational unit (3) until the following applies: $t > (t_0 + d_2)$.

**14.** Display device according to one of Claims 9 to 13,

**characterized**

**in that** the display device comprises an interface for receiving data for the speed of the motor vehicle, and in that the duration of the total rotation and/or the duration of the rotation for the first and/or second phase can be determined with the control device as a function of these speed data.

**15.** Motor vehicle having a display device according to one of Claims 9 to 14.


**Revendications**

**1.** Procédé pour l'affichage d'informations dans un véhicule automobile, dans lequel :

- au moins un objet plan (6), dans une première représentation qui affiche une face de l'objet (6), et dans une seconde représentation qui affiche une autre face de l'objet (6), est représenté graphiquement au moyen d'un afficheur (1) monté dans le véhicule automobile,
- des informations différentes étant affichées sur les faces respectives de l'objet graphique plan (6), et
- l'objet graphique (6), dans la première et/ou la seconde représentation, s'étendant dans au moins une direction sur sensiblement la totalité de la taille de l'affichage (1),

**caractérisé en ce que**

- la représentation de l'objet graphique (6) est modifiée en fonction d'un signal de commande de telle manière que l'objet graphique (6), dans le cas d'une représentation en perspective sur l'afficheur (1), tourne d'une face à l'autre face,
- l'objet graphique plan (6), lors de la rotation, étant toujours représenté en entier au moins en perspective,
- l'axe vertical (5), lors de la rotation, étant déplacé dans la direction horizontale et l'objet graphique (6) étant simultanément mis en rotation autour de l'axe vertical (5) de manière à ce qu'après une rotation de 180°, l'axe vertical (5) ait atteint la position correspondant à la seconde représentation.

**2.** Procédé selon la revendication 1, **caractérisé en ce que**

la représentation de l'objet graphique (6) est modifiée en fonction d'un signal de commande de telle manière que l'objet graphique (6) soit mis en rotation autour d'un axe vertical (5) qui se situe, au moins au début de la rotation, à l'extérieur de l'objet graphique (6) ou qui passe par le point latéralement le plus extérieur du bord de l'objet graphique (6).

**3.** Procédé selon la revendication 1 ou 2, **caractérisé en ce que**

la représentation de l'objet graphique (6) est modifiée en fonction d'un signal de commande de telle manière que le déplacement horizontal de l'axe vertical (5) soit linéairement synchronisé avec la rotation de l'objet graphique (6).

**4.** Procédé selon l'une des revendications précédentes,

**caractérisé en ce que**

la rotation se décompose en une première phase lors de laquelle des pixels de l'objet graphique (6) sont déplacés de manière accélérée, et une seconde phase lors de laquelle des pixels de l'objet graphique sont déplacés de manière ralentie.

**5.** Procédé selon la revendication 4,

**caractérisé en ce que** la première phase correspond à un angle de rotation de l'objet graphique (6) de 0° à 90° et **en ce que** la seconde phase correspondant à un angle de rotation de l'objet graphique (6) de 90° à 180°.

**6.** Procédé selon l'une des revendications 4 ou 5,

**caractérisé en ce que**

lors du calcul des données graphiques pour des images intermédiaires consécutives destinées à la représentation de la rotation, les positions consécutives x des pixels de l'objet (6) pendant la première phase sont obtenues par les étapes de calcul suivantes :

$$(\text{i}) \qquad n = \frac{t - t_0}{d_1} \quad ;$$

$$(\text{ii}) \qquad x = b_1 + c_1 \cdot n^4,$$

où
t est un temps système lors duquel les données graphiques générées sont représentées sur l'afficheur (1), avec $t = t_0$ au début de la rotation de la première phase,
$d_1$ est la durée de la première phase,
$b_1$ est la position initiale du pixel de l'objet graphique (6),
$c_1$ est le déplacement total du pixel de l'objet graphique (6) lors de la première phase, et
dans lequel les étapes (i) et (ii) sont répétées jusqu'à ce que l'on ait : $t > (t_0 + d_1)$.

**7.** Procédé selon l'une des revendications 4 à 6,
**caractérisé en ce que**
lors du calcul des données graphiques pour des images intermédiaires consécutives destinées à la représentation de la rotation, les positions consécutives x des pixels de l'objet (6) pendant la seconde phase sont obtenues par les étapes de calcul suivantes :

$$(\text{i}) \qquad n = \frac{t - t_0}{d_1} - 1 \quad ;$$

$$(\text{ii}) \qquad x = b_2 + c_2 \cdot (1 - n^4),$$

où
t est un temps système lors duquel les données graphiques générées sont représentées sur l'afficheur (1), avec $t = t_0$ au début de la rotation de la seconde phase,
$d_2$ est la durée de la seconde phase,
$b_2$ est la position initiale du pixel de l'objet graphique (6),
$c_2$ est le déplacement total du pixel de l'objet graphique (6) lors de la seconde phase, et
les étapes (i) et (ii) sont répétées par l'unité de calcul jusqu'à ce que l'on ait : $t > (t_0 + d_2)$.

**8.** Procédé selon l'une des revendications précédentes,
**caractérisé en ce que**

- la vitesse du véhicule automobile est mesurée et la durée de la rotation totale et/ou la durée de la rotation des première et/ou seconde phases est obtenue en fonction de la vitesse du véhicule automobile.

**9.** Dispositif d'affichage pour véhicule automobile, comprenant :

- un afficheur (1) destiné à afficher graphiquement des informations, qui est monté dans le véhicule automobile,
- une unité de commande (2) au moyen de laquelle on peut générer des données graphiques qui représentent au moins un objet graphique plan (6) pouvant être représenté sur l'afficheur (1) dans une première représentation qui affiche une face de l'objet, et dans une seconde représentation qui affiche l'autre face de l'objet,

- dans lequel différentes informations sont représentées sur les faces respectives de l'objet graphique plan (6),
- dans lequel, dans la première et/ou la seconde représentation, l'objet graphique (6) s'étend dans au moins une direction sur sensiblement la totalité de la taille de l'afficheur (1),

**caractérisé en ce que**

- les données graphiques sont modifiées par l'unité de commande (2) de telle manière que l'objet graphique (6), lors d'une représentation en perspective sur l'afficheur (1), tourne d'une face à l'autre face,
- l'objet graphique plan (6), lors de la rotation, étant toujours représenté en entier au moins en perspective, et
- l'axe vertical (5), lors de la rotation, étant déplacé dans la direction horizontale et l'objet graphique (6) étant simultanément mis en rotation autour de l'axe vertical de manière à ce qu'après une rotation de 180°, l'axe vertical ait atteint la position correspondant à la seconde représentation.

**10.** Dispositif d'affichage selon la revendication 9,
**caractérisé en ce que**
les données graphiques peuvent être modifiées au moyen de l'unité de commande (2) de telle manière que l'objet graphique (6) soit mis en rotation autour d'un axe vertical (5) qui se situe, au moins au début de la rotation, à l'extérieur de l'objet graphique (6) ou qui passe par le point latéralement le plus extérieur du bord de l'objet graphique (6).

**11.** Dispositif d'affichage selon l'une des revendications 9 ou 10,
**caractérisé en ce que**
la rotation se décompose en une première phase lors de laquelle des pixels de l'objet graphique (6) sont déplacés de manière accélérée et une seconde phase lors de laquelle des pixels de l'objet graphique sont déplacés de manière ralentie.

**12.** Dispositif d'affichage selon la revendication
**caractérisé en ce que**
lors du calcul des données graphiques pour des images intermédiaires consécutives destinées à la représentation de la rotation, les positions consécutives x des pixels de l'objet graphique (6) pendant la première phase, peuvent être obtenues par l'unité de calcul (3) effectuant les étapes de calcul suivantes :

$$(\text{i}) \qquad n = \frac{t - t_0}{d_1} \quad ;$$

$$(\text{ii}) \qquad x = b_1 + c_1 \cdot n^4,$$

où
t est un temps système lors duquel les données graphiques générées sont représentées sur l'afficheur (1), avec $t = t_0$ au début de la rotation de la première phase,
$d_1$ est la durée de la première phase,
$b_1$ est la position initiale du pixel de l'objet graphique (6),
$c_1$ est le déplacement total du pixel de l'objet graphique (6) lors de la première phase, et
dans lequel les étapes (i) et (ii) sont répétées par l'unité de calcul (3) jusqu'à ce que l'on ait : $t > (t_0 + d_1)$.

**13.** Dispositif d'affichage selon la revendication 11 ou 12,
**caractérisé en ce que**
lors du calcul des données graphiques pour des images intermédiaires consécutives destinées à la représentation de la rotation, les positions consécutives x des pixels de l'objet graphique (6) pendant la seconde phase peuvent être obtenues par l'unité de calcul (3) effectuant les étapes de calcul suivantes :

$$\text{(i)} \qquad n = \frac{t - t_0}{d_1} - 1 \quad;$$

$$\text{(ii)} \qquad x = b_2 + c_2 \cdot (1 - n^4),$$

où

t est un temps système lors duquel les données graphiques obtenues sont représentées sur l'afficheur (1), avec $t = t_0$ au début de la rotation de la seconde phase,

$d_2$ est la durée de la seconde phase,

$b_2$ est la position initiale du pixel de l'objet graphique (6),

$c_2$ est le déplacement total du pixel de l'objet graphique (6) lors de la seconde phase, et

dans lequel les étapes (i) et (ii) sont répétées par l'unité de calcul (3) jusqu'à ce que l'on ait : $t > (t_0 + d_2)$.

**14.** Dispositif d'affichage selon l'une des revendications 9 à 13,
**caractérisé en ce que**

- le dispositif d'affichage comprend une interface destinée à la réception de données correspondant à la vitesse du véhicule automobile, et **en ce que** la durée de la rotation totale et/ou la durée de la rotation correspondant à la première et/ou à la seconde phase peuvent être obtenues au moyen de l'unité de commande en fonction de ces données de vitesse.

**15.** Véhicule automobile comprenant un dispositif d'affichage selon l'une des revendications 9 à 14.

FIG. 1

FIG. 2

FIG. 3

FIG. 4

FIG. 5

**FIG. 6**

**FIG. 7**

| Titel | Dauer | Interpret ▼ | |
|---|---|---|---|
| Good People | 3:28 | Jack Johnson | |
| No Other Way | 3:09 | Jack Johnson | |
| Sitting, Waiting, Wishing | 3:03 | Jack Johnson | |
| Staple It Together | 3:16 | Jack Johnson | |
| Situations | 1:17 | Jack Johnson | |

12:00 T-MobileD ◄ •◘▢◘• ▷ 22.5°C 🌀 ❄ 4

**FIG. 8**

FIG. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10001988 A1
- DE 10303792 A1
- DE 19941955 A1
- GB 2406768 A
- DE 10058244 C2
- DE 10305341 A1
- DE 102004048956 A1
- EP 1212208 B1